# EUROPEAN PATENT APPLICATION

(11) **EP 0 924 485 A1**
(43) Date of publication of application: **23.06.1999**
(21) Application number: 98403176.5
(22) Date of filing: 16.12.1998
(51) Int. Cl.: F25J 3/02, C01B 21/083, C01B 17/45, C01B 31/00

(54) **Process for separating and puryfying fluorine compounds, and installation thereof**

(30) Priority: 22.12.1997 JP 35300497
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Nagamura, Takashi c/o l'Air Liquide, SA, 75321 Paris Cédex 07 (FR)
(74) Representative: Conan, Philippe Claude

(57) **Abstract**

There are provided a process for separating and purifying fluorine compounds, in which a proper rectifying operation of a mixed gas can be carried out even when it contains methane trifluoride, whereby fluorine compound components contained in the mixed gas can be separated and purified up to such concentrations as they can be reutilized, and further an installation therefor.

In a process for separating and purifying fluorine compounds, in which from a mixed gas containing plural fluorine compounds a part of or all of these respective components is separated and purified by use of rectification units, methane trifluoride is previously separated and removed from said mixed gas containing methane trifluoride by an adsorption unit A1, and then a part of or all of the remaining components is separated in turn through rectification by said rectification units K1, K2, K3.

## Description

The present invention relates to a process for separating and purifying fluorine compounds, in which fluorine compounds are separated and purified from a mixed gas which has been concentrated and recovered by previously purifying a gaseous mixture discharged, for example, from a semiconductor-manufacturing process, and containing fluorine compounds, and further to an installation therefor.

An exhaust gas discharged from a semiconductor-manufacturing process, especially from an etching and cleaning step, may contain fluorine compounds such as methane tetrafluoride, nitrogen trifluoride, methane trifluoride, ethane hexafluoride and sulfur hexafluoride. It has been pointed out that almost all of these fluorine compounds are gases causing the earth warming because their life is measured to be several thousands years in the atmosphere and they are strong ultrared absorbents.

Accordingly, there have been hitherto discussed various methods for decomposing or recovering these fluorine compounds. For instance, the official gazette of Japanese Patent Application Laid-open (Kokai) No. 103,633/1997 discloses a method for recovering perfluoro compounds through membrane separation by use of a glass-like polymer membrane.

Since fluorine compounds concentrated and recovered by the aforementioned method are obtained in the form of a mixture, however, said mixture must be further separated and purified in order to reutilize the respective components thereof. Furthermore, the official gazette of Japanese Patent Application Laid-open (Kokai) No. 240,382/1996 discloses a method comprising previously separating and removing a carrier gas and then separating and purifying fluorine compounds by use of a rectification column.

However, the inventor of this application has newly found out that in a case where a mixed gas as a feed material contains methane trifluoride although a carrier gas is previously removed, the separation of methane trifluoride using a rectification column can not be carried out because it may cause an azeotrope with methane hexafluoride or sulfur hexafluoride. Furthermore, the inventor has newly found out that methane trifluoride has a higher polarity and hence it will be separated in phase from fluorine compounds having a lower polarity as the mixed gas is liquefied, thereby causing such a problem that a proper rectifying operation can not be carried out because one component thereof is concentrated in the bottom of the rectification column depending on a density difference between them.

Due to consideration of the aforementioned problems, therefore, it is an object of the present invention to provide a process for separating and purifying fluorine compounds, in which a proper rectifying operation of a mixed gas can be carried out even when it contains methane trifluoride, whereby fluorine compound components contained in the mixed gas can be separated and purified up to such concentrations as they can be reutilized, and further an installation therefor.

The characteristic construction of a separating and purifying process according to the present invention for achieving this purpose resides in :
a process for separating and purifying fluorine compounds, which comprises separating and purifying from a mixed gas containing plural fluorine compounds a part of or all of these respective components by use of rectification units, characterized in that methane trifluoride is previously separated and removed from said mixed gas containing methane trifluoride, and a part of or all of the remaining components are then separated in turn through rectification by said rectification units.

Although adsorption, membrane separation or absorption can be adopted as a method for separating and removing said methane trifluoride in the aforementioned process, it is preferred, judging from the operational effects mentioned below, that the separation and removal of said methane trifluoride comprises separating methane trifluoride through adsorption by an adsorption unit.

Judging from the operational effects mentioned below, it is further preferred that a mixture of fluorine compounds approximate in their boiling points is obtained by said separation through rectification, and any fluorine compound is then separated through adsorption from the same mixture by an adsorption unit.

Although anyone of said mixed gases is an object of the present invention if it is of a gas containing methane trifluoride and other fluorine compounds, it is preferred, judging from the operational effects mentioned below, that said mixed gas contains nitrogen, methane tetrafluoride, nitrogen trifluoride, methane trifluoride, ethane hexafluoride and sulfur hexafluoride.

Furthermore, the characteristic construction of a separating and purifying installation according to the present invention resides in :
an installation for separating and purifying fluorine compounds, in which from a mixed gas containing plural fluorine compounds a part of or all of these respective components is separated and purified by use of rectification units, characterized in that an adsorption unit is provided which previously separates methane trifluoride of the plural fluorine compounds through adsorption, and a plurality of rectification units are provided which receive a gas from said adsorption unit and separate from the same gas a part of or all of the remaining components in turn through rectification.

Judging from the operational effects mentioned below, it is preferred that another adsorption unit is further provided which receives a mixture of fluorine compounds approximate in their boiling points, which has been separated through rectification by said rectification units, and separates from the same mixture any fluorine compound through adsorption.

According to the separating and purifying process of the present invention, no problem of the aforementioned azeotrope of methane trifluoride is caused to happen and the danger of an explosion which may be caused by the concentration of methane trifluoride is less because from said mixed gas containing methane trifluoride said methane trifluoride is previously separated and removed, and further a proper rectifying operation can be carried out, while no phase separation is caused even when the mixed gas is liquefied, because a rectifying operation can be carried out as methane trifluoride having a higher polarity does not exist.

As a result, there has been provided a process for separating and purifying fluorine compounds, in which a proper rectifying operation of a mixed gas can be carried out even when it contains methane trifluoride, whereby fluorine compound components contained in the mixed gas can be separated and purified up to such concentrations as they can be reutilized.

In a case where the separation and removal of said methane trifluoride comprises separating methane trifluoride through adsorption by an adsorption unit, the separation of methane trifluoride can be selectively carried out. According to this method, as compared with other methods, the separating efficiency is higher and the operation can be relatively simply carried out.

Furthermore, in a case where a mixture of fluorine compounds approximate in their boiling points is obtained by said separation through rectification, and any fluorine compound is then separated through adsorption from the same mixture by an adsorption unit, a further separation and purification can be carried out by virtue of the separation of any fluorine compound through adsorption by the adsorption unit after the mixture is obtained, although a rectifying operation is carried out with difficulty when fluorine compounds approximate in their boiling points exist, and as a result, fluorine compound components can be separated and purified up to such concentrations as they can be reutilized.

In a case where said mixed gas contains nitrogen, methane tetrafluoride, nitrogen trifluoride, methane trifluoride, ethane hexafluoride and sulfur hexafluoride, the aforementioned operational effects can be preferably obtained, with avoiding problems of the azeotrope of methane trifluoride with ethane hexafluoride or sulfur hexafluoride and the phase separation thereof, by previously removing methane trifluoride. Furthermore, in this case, the aforementioned operational effects can be preferably obtained by separating nitrogen trifluoride (whose boiling point under normal pressure is -129.0 °C) and methane tetrafluoride (whose boiling point under normal pressure is -127,9 °C, which are fluorine compounds approximate in their boiling points, through adsorption after the mixed gas is rectified.

On the other hand, an adsorption unit is provided which previously separates methane trifluoride through adsorption and a plurality of rectification units are provided which receive an adsorption gas from said adsorption unit and separate a part of or all of the remaining components in turn through rectification, according to the separating and purifying installation of the present invention. Accordingly, a proper rectifying operation can be carried out while no phase separation is caused to happen even when the mixed gas is liquefied because a rectifying operation can be carried out as a fluorine compound having a higher polarity does not exist. Further, a problem of the aforementioned azeotrope of methane trifluoride and a problem of the aforementioned danger of an explosion caused by methane trifluoride can be avoided.

As a result, there has been provided an installation for separating and purifying fluorine compounds, in which a proper rectifying operation of a mixed gas can be carried out even when it contains methane trifluoride, whereby fluorine compound components contained in the mixed gas can be separated and purified up to such concentrations as they can be reutilized.

In a case where another adsorption unit is further provided which receives a mixture of fluorine compounds approximate in their boiling points, which has been separated through rectification by said rectification units, and separates from the same mixture any fluorine compound through adsorption, a further separation and purification can be carried out and as a result, fluorine compound components can be separated and purified up to such concentrations as they can be reutilized, because another adsorption unit is further provided which separates any fluorine compound through adsorption from the mixture separated through rectification, although a rectifying operation is carried out with difficulty when fluorine compounds approximate in their boiling points exist.

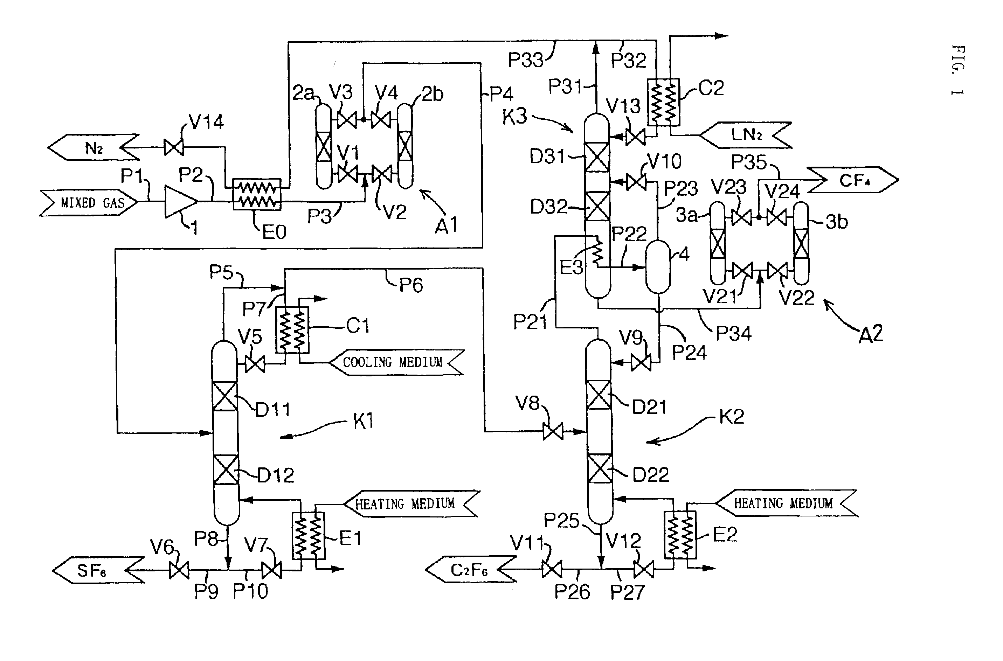

An embodiment of the present invention will be described here on the basis of Fig. 1.

In this embodiment, there will be given an example of producing methane tetrafluoride, ethane hexafluoride, sulfur hexafluoride and the likes from a feed gas by use of an installation in the embodiment shown in Fig. 1. Said feed gas will be "a fluorine compounds concentration recovery gas" comprising about 5% of nitrogen N₂, about 29% of methane tetrafluoride CF₄, about 2% of nitrogen trifluoride NF₃, about 1% of methane trifluoride CHF₃, about 61% of ethane hexafluoride C₂F₆, and about 2% of sulfur hexafluoride SF₆, which is obtained by purifying "a fluorine compounds recovery gas" containing about 2,000 PPM of fluorine compounds, which has been used in a semiconductor-manufacturing unit, then recovered and diluted with nitrogen gas, by use of another prepurification unit, so that a major part of nitrogen gas is removed therefrom and fluorine compounds are concentrated. In a case where a feed gas contains nitrogen N₂ in an amount of more than about 10%, in addition, it is preferred that the feed gas is previously purified by a prepurification unit as mentioned above so that nitrogen N₂ is less than about 10%.

In this embodiment, there will be given an example where an adsorption unit Al is used to separate and remove methane trifluoride and where a mixture of fluorine compounds approximate in their boiling points is obtained by said separation through rectification, and any fluorine compound is then separated through adsorption from the same mixture by an adsorption unit A2.

After the aforementioned feed mixed gas is introduced at 100 Nm³/h into a compressor 1 through a pipe P1 so as to be compressed to a pressure of about 9.2 ata and taken out through a pipe P2, it is introduced into a path of a heat exchanger E0 so as to be cooled down to about 30 °C and taken out therefrom through a pipe P3. Then, the feed gas is introduced into one 2a of adsorbers 2a and 2b having synthetic zeolite charged therein, where methane trifluoride in the feed gas introduced in the adsorber 2a is adsorbed, and thereafter the remaining feed gas is taken out through a pipe P4 and introduced into a rectification column K1. These adsorbers 2a and 2b will be alternately used, where when the adsorber 2a is used for adsorption while another adsorber 2b is regenerated by nitrogen gas led from a route (not shown). In addition, the switch-over of these adsorbers 2a and 2b will be carried out by operations of valves V1 to V4.

The mixed gas comprising nitrogen gas, methane tetrafluoride, nitrogen trifluoride, ethane hexafluoride and sulfur hexafluoride, which has been introduced in between the rectifying portions D11 and D12 of said rectification column K1, is permitted to rise through the rectifying portion D11 and a part of the mixed gas is introduced into a condenser C1 provided on the top of the rectification column K1 through pipes P5 and P7. Thus, the mixed gas is cooled down to a temperature of about -40 °C with a cooling medium (i.e. ammonia or hydrocarbons) having a temperature of about -43 °C, introduced therein from the outside, and the partially condensed mixed gas is returned to the top of the rectification column K1 through a valve V5.

The liquid portion of said mixed gas which has partially condensed in the condenser C1 and returned to the top of the rectification column K1 is caused to flow down as a reflux liquid through the rectifying portions D11 and D12 of the rectification column K1, and it is rectified through gas-liquid contact with the mixed gas introduced therein through the pipe P4 and a gas which has been gasified in a reboiler E1 disposed in the lower portion of the rectification column K1 and caused to rise here. By virtue of this rectification, almost all of sulfur hexafluoride is liquefied and ethane hexafluoride is also liquefied in a small amount, thereby providing a mixed liquid. This mixed liquid is then introduced into the reboiler E1 by way of pipes P8, P10 and a valve V7 so as to be gasified, and at the same time, it will be recovered under a pressure of about 9 ata and at a temperature of about -16 °C by way of pipes P8, P9 and a valve V6.

A mixed gas comprising nitrogen gas, methane tetrafluoride, nitrogen trifluoride and ethane hexafluoride, which has been taken out of the top of the rectification column K1 under a pressure of about 8.7 ata and at a temperature of about -40 °C, is introduced in between the rectifying portions D21 and D22 of a rectification column K2 by way of pipes P5, P6 and a valve V8, and caused to flow down through the rectifying portion D22 as it is partially condensed. The remaining part of the mixed gas is permitted to rise through the rectifying portion D21, taken out through a pipe P21, and introduced into a reboiler E3 disposed in the bottom of the rectification column K3 so as to be used as a source of heat, and the mixed gas itself is cooled down so as to be partially condensed and led to a gas-liquid separator 4 through a pipe P22. A mixed gas consisting of nitrogen, ethane tetrafluoride and nitrogen trifluoride, which has been separated as a gas in the gas-liquid separator 4, is introduced into a rectification column K3 through a pipe P23 and by way of a valve V10.

In the gas-liquid separator 4, liquid is passed through a pipe P24 and a valve V9 so as to become a reflux liquid for the rectification column K2, and this reflux liquid is caused to flow down through the rectifying portions D21, D22 and purified through cuntercurrent contact with a rising gas, and a liquid stored in the bottom of the rectification column K2 is taken out and led to a reboiler E2 by way of pipes P25, P27 and a valve V12. Said liquid is partially evaporated in the reboiler E2, introduced into the rectification column K2 again, and caused to rise through the same rectification column K2.

Liquefied methane hexafluoride which has been rectified in the rectification column K2 and whose concentration has got almost 100%, is led out of the same rectification column K2 under a pressure of about 7,8 ata and at a temperature of about -30 °C, and it will be recovered as a product by way of pipes P25, P26 and a valve V11.

On the other hand, the mixed gas consisting of nitrogen, methane tetrafluoride and nitrogen trifluoride, which has been separated as a gas in the gas-liquid separator 4, is introduced in between the rectifying portions D31 and D32 of a rectification column K3 by way of a pipe P23 and a valve V10.

After said mixed gas introduced in the rectification column K3 is caused to rise through the rectifying portion D31, it is introduced into a condenser C2 through pipes P31 and P32, where it is cooled down by a cooling medium of liquid nitrogen so as to provide a reflux liquid, and said reflux liquid is caused to flow down through the rectification column K3 by way of a valve V13. Nitrogen separated through rectification in the rectification column K3 is taken out under a pressure of about 5.2 ata and at a temperature of about -179 °C from the top of the rectification column K3, introduced into another path of the heat exchanger E0, and then it will be taken out by way of a valve V14.

Methane tetrafluoride and nitrogen trifluoride, which have been separated through rectification in the rectification column K3 and stored in the bottom of said rectification column K3, are taken out under a pressure of about 5.3 ata and at a temperature of about -99 °C through a pipe P34, and introduced into anyone of the adsorbers 3a, 3b. Here, nitrogen trifluoride is adsorbed for removal and methane tetrafluoride will be recovered as a product under a pressure of about 5.1 ata and at a temperature of about -99 °C through a pipe P35. These adsorbers 3a and 3b will be alternately used for adsorption by the operation of valves V21 to V24 and they will be regenerated by nitrogen gas led from a route (not shown). In addition, these adsorbers 3a and 3b are filled with synthetic zeolite.

The additional operational effects of this embodiment will be described as follows.
(1) By virtue of the separation of fluorine compounds through rectification carried out in turn from a higher boiling point substance as the temperatures of the column bottoms of said rectification column K1, rectification column K2 and rectification column K3 are made gradually lower in this order, a rectifying operation can be carried out through simpler routes, with facilitating the selection of a cooling medium, and further the thermal efficiency can be more enhanced, with avoiding problems of the phase separation and component solidification.
(2) The use of the reboiler of the rectification column K3 as a condenser to be provided on the rectification column K2 enables to simplify the construction of the installation and to enhance the thermal efficiency more.
(3) The separation of a mixed gas to the reflux liquid of the rectification column K2 and the feed gas of the rectification column K3 by the gas-liquid separator 4 enables to enhance the concentration of an aimed substance in the feed gas of the rectification column K3 more.

Other embodiments will be described here.
[1] Although there has been given, in the former embodiment, an example where the separation of fluorine compounds through rectification is carried out in turn from a higher boiling point substance as the temperatures of the column bottoms of said rectification column K1, rectification column K2 and rectification column K3 are made gradually lower in this order, it is possible to carry out the separation of fluorine compounds in turn from a lower boiling point substance as the temperatures of the column bottoms of said rectification column K1, rectification column K2 and rectification column K3 are made gradually higher in this order, and it is also possible to select the reverse order.
[2] Although there has been given, in the former embodiment, an example of using the reboiler of the rectification column K3 as a condenser to be provided on the rectification column K2, it may be conceived that a condenser is provided on the rectification column K2 and a reboiler is separately provided in the rectification column K3.
[3] Although there has been given, in the former embodiment, an example of separating a mixed gas to the reflux liquid of the rectification column K2 and the feed gas of the rectification column K3 by the gas-liquid separator 4, it may be constructed that the feed gas is directly led to the rectification column K3 from the pipe P21.
[4] Although there has been given, in the former embodiment, an example where a mixture of fluorine compounds approximate in their boiling points is obtained by a separation through rectification, and any fluorine compound is then separated through adsorption from the same mixture by an adsorption unit, it goes without saying that such an separation through adsorption as mentioned above is not necessary in a case where fluorine compounds approximate in their boiling points do not coexist.
[5] Although there has been given, in the former embodiment, an example of separating methane trifluoride through adsorption by an adsorption unit, it is possible to separate and remove methane trifluoride through membrane separation or absorption. In this case, there will be used a membrane separator utilizing a polymer membrane for gas separation, through which methane trifluoride is selectively permitted to permeate, or various absorption units utilizing an absorbent capable of selectively absorbing methane trifluoride.
[6] The composition of a feed gas, temperatures and pressures exemplified in the aforementioned description are merely one example when the present invention is put into practice. However, these factors are not limited to the aforementioned figures because they vary depending on the design of respective unit parts and the operating condition.

Fig. 1 is a schematic constructional view showing one example of an installation for separating and purifying fluorine compounds.

## Claims

1. A process for separating and purifying fluorine compounds, which comprises separating and purifying from a mixed gas containing plural fluorine compounds a part of or all of these respective components by use of rectification units, characterized in that
methane trifluoride is previously separated and removed from said mixed gas containing methane trifluoride, and a part of or all of the remaining components are then separated in turn through rectification by said rectification units.

2. A process for separating and purifying fluorine compounds, according to claim 1, in which the separation and removal of said methane trifluoride comprises separating methane trifluoride through adsorption by an adsorption unit.

3. A process for separating and purifying fluorine compounds, according to claim 1 or 2, in which a mixture of fluorine compounds approximate in their boiling points is obtained by said separation through rectification, and any fluorine compound is then separated through adsorption from the same mixture by an adsorption unit.

4. A process for separating and purifying fluorine compounds, according to anyone of claims 1 to 3, in which said mixed gas contains nitrogen, methane tetrafluoride, nitrogen trifluoride, methane trifluoride, ethane hexafluoride and sulfur hexafluoride.

5. An installation for separating and purifying fluorine compounds, in which from a mixed gas containing plural fluorine compounds a part of or all of these respective components is separated and purified by use of rectification units, characterized in that an adsorption unit is provided which previously separates methane trifluoride of the plural fluorine compounds through adsorption, and a plurality of rectification units are provided which receive a gas from said adsorption unit and separate from the same gas a part of or all of the remaining components in turn through rectification.

6. An installation for separating and purifying fluorine compounds, according to claim 5, in which another adsorption unit is further provided which receives a mixture of fluorine compounds approximate in their boiling points, which has been separated through rectification by said rectification units, and separates from the same mixture any fluorine compound through adsorption.
